# EUROPEAN PATENT SPECIFICATION

(11) **EP 4 724 165 B1**
(45) Date of publication and mention of the grant of the patent: **27.05.2026**
(21) Application number: 25725524.0
(22) Date of filing: 20.05.2025
(51) Int. Cl.: B01D 19/00, B04C 5/00

(54) **PHASE SEPARATION SYSTEM**
PHASENTRENNSYSTEM
SYSTÈME DE SÉPARATION DE PHASES

(30) Priority: 30.08.2024 EP 24382939
(43) Date of publication of application: 15.04.2026
(73) Proprietor: Ronnach Technologies, S.L., 08015 Barcelona (ES)
(72) Inventor: BLANCO NUÑEZ, Igor Diego, 36950 Moaña (ES)
(74) Representative: ZBM Patents - Zea, Barlocci & Markvardsen
(86) International application number: PCT/EP2025/063743
(87) International publication number: WO 2026/046545

(56) References cited:
- EP-B1- 3 018 252
- CA-A- 1 061 289
- CN-B- 103 990 304
- DE-A1- 102009 031 103
- GB-A- 1 465 356
- US-A- 5 332 501
- US-A- 5 529 698
- US-A1- 2012 297 986
- US-B2- 6 866 703

## Description

The present disclosure relates to a phase separation system for separating a first phase from a second phase.

### BACKGROUND

Being able to separate phases (e.g., liquid and gas) is of great importance in a variety of industries. In particular, being able to separate phases is crucial in sectors such as oil and gas, mining, agriculture, food and drink, water treatment and paper manufacturing.

However, many conventional phase separation systems comprise moving mechanical parts. These parts are often prone to breaking and typically demand regular maintenance and repair, which may increase the downtime and the running costs of these phase separation systems. For instance, separation of high viscosity liquids using these conventional phase separation systems may necessitate regular cleaning of moving mechanical parts in order to ensure optimal performance.

Conventional phase separation systems generally comprise pipes that transport separated fluids from a main body, such as a chamber. In many conventional phase separation systems, these pipes may not be fully occupied during use. In other words, the liquid, for instance, transported by these pipes may not completely fill them. Resultingly, the accuracy of measurement of properties of the liquid, which is vital in certain industries, may be difficult to perform accurately and/or reliably. Relatedly, methods of phase separation which depend on heating or chemical methods may change properties of the fluids, thereby hindering reliable measurement. An example of a phase separator is provided in US5529698A.

Hence, there is a need for a phase separation system that may perform separation without reliance on any moving mechanical parts. Further, there is a need for a phase separation system that facilitates accurate measurement of separated phases.

### SUMMARY

According to a first aspect there is provided, a phase separation system for separating a first phase and a second phase. The phase separation system is defined in claim 1.

The chamber may be cylindrical.

The bent section may comprise a port for releasing liquid.

A stationary point of the bent section may be misaligned with the longitudinal axis of the chamber.

The second conduit may comprise a straight section extending along the longitudinal axis of the chamber from the conical portion to the bent section.

The conical portion may be connected to the chamber in the same horizontal plane as the peak point or above the peak point.

The first conduit and the second conduit may merge at the peak point to recombine the first phase and the second phase.

The phase separation system may further comprise one or more measurement devices along the first conduit and/or the second conduit configured to measure a property of the first phase and/or the second phase.

The one or more measurement devices may be selected from a list comprising: a flowmeter, a calorimeter, a thermometer, a barometer, a hydrometer, a rheometer, a pH meter and a conductivity meter.

The first conduit and/or the second conduit may be directly connectable to at least one of: a spectrometer, a chromatograph, a mass spectrometer, a microscope, a DLS detector, a diffractometer, a tomograph, a velocimeter, a calorimeter and a thermogravimetric analyser.

The phase separation system may further comprise a chemical compound along the first conduit and/or the second conduit configured to chemically react with the first phase and/or the second phase.

The phase separation system may further comprise one or more treatment devices along the first conduit and/or the second conduit configured to treat the first phase and/or the second phase.

The one or more treatment devices is selected from a list comprising: a UV light source, a heater, a cooler, an ultrasound source, a microwave source, an ionizer, an electrocoagulation device and a filter.

The phase separation system may further comprise a baffle towards the top of the chamber.

### BRIEF DESCRIPTION OF THE DRAWINGS

Non-limiting examples of the present disclosure will be described in the following, with reference to the appended drawings, in which:
Figures 1A and 1B illustrate different examples of a phase separation system;
Figure 2 illustrates the whirlpool generated in the phase separation systems of Figures 1A and 1B;
Figures 3A and 3B illustrate, respectively, the phase separation systems of Figures 1A and 1B connected to a pump;
Figures 4A and 4B illustrate dimensional information relating to, respectively, the phase separations systems of Figures 1A and 1B;
Figure 5 illustrates relative dimensions of the phase separation systems;
Figures 6A and 6B illustrate a baffle of the phase separation systems; and
Figure 7 illustrates a method of phase separation.

### DETAILED DESCRIPTION OF EXAMPLES

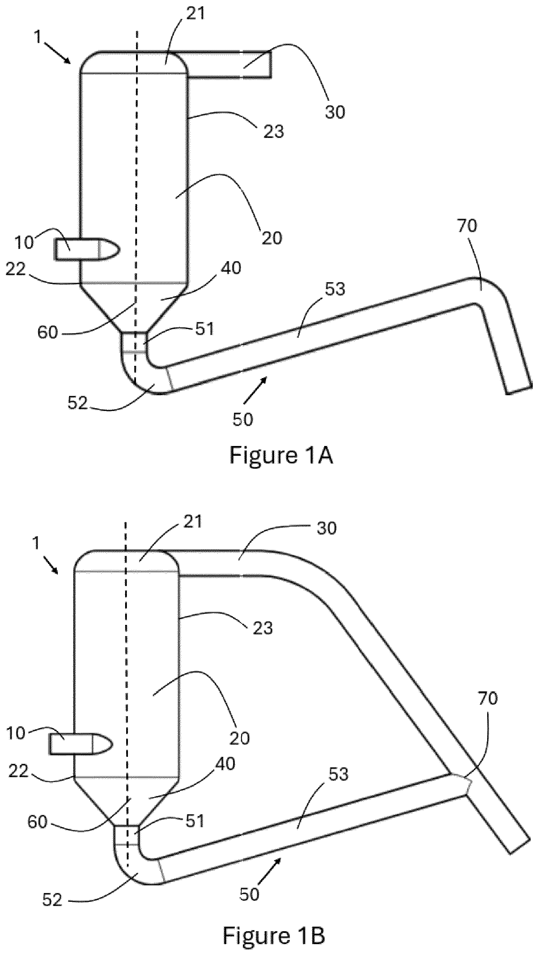

Figures 1A and 1B illustrate two examples of a phase separation system 1 for separating a first phase and a second phase. As shown in Figures 1A and 1B, the phase separation system 1 comprises an inlet 10, a chamber 20, a first conduit 30, a conical section 40 and a second conduit 50.

The inlet 10 is configured to receive a fluid mixture comprising the first phase and the second phase. The first phase is a gas, and the second phase is a liquid. The inlet 10 may be a pipe for entry of the fluid mixture.

The chamber 20 comprises a top portion 21 and a bottom portion 22. A curved surface 23 extends between the top portion 21 and the bottom portion 22. Advantageously, the curved surface 23 may facilitate generation of a whirlpool (see below). The chamber 20 is configured for ingress of the mixture from the inlet 10. In other words, the top portion 21, the bottom portion 22 and the curved surface 23 enclose a space or cavity into which the fluid enters via the inlet 10. In the examples shown in Figures 1A and 1B, the chamber 20 is cylindrical. The chamber 20 may have a circular cross section, an elliptical cross section, or similar. In use, the longitudinal axis 60 of the chamber 20, which extends between the top portion 21 and the bottom portion 22, is typically perpendicular or substantially perpendicular to the surface on which the phase separation system 1 rests (e.g., the ground). For instance, in use, the phase separation system 1 may be upright on a flat surface such that the longitudinal axis 60 forms a right angle with the flat surface.

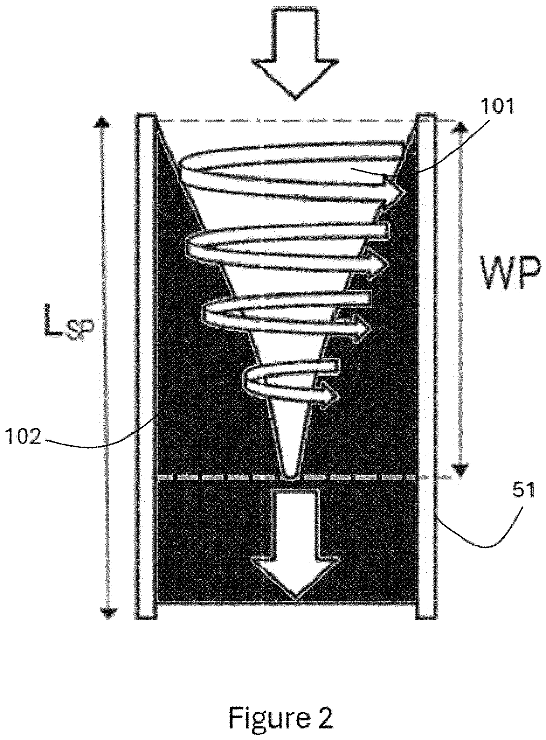

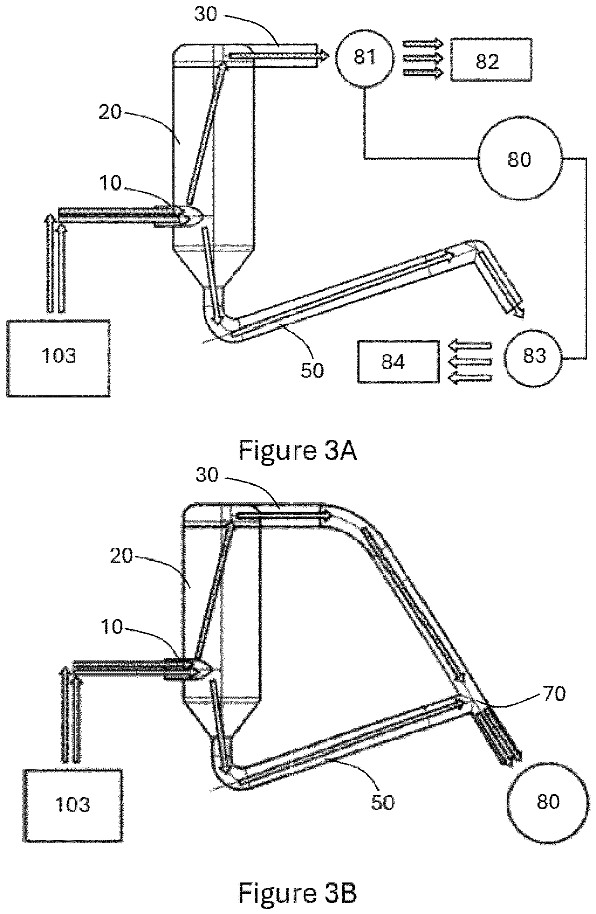

The inlet 10 is tangential to the curved surface 23. Tangential entry of liquid into the chamber 20, along with the pressure gradient created by gravity and, in some examples a pump (see Figures 3A and 3B), generates the whirlpool. Advantageously, this whirlpool aids in liquid evacuation via the second conduit 50. The whirlpool may also, advantageously, encourage gas evacuation via the first conduit 30. Further advantageously, the whirlpool may facilitate full occupation of the second conduit 50 by the liquid by regulating the flow of liquid down the chamber 20. The whirlpool is discussed in more detail below, for instance, in relation to Figure 2. Moreover, because this means of phase separation does not depend on moving mechanical parts, downtime of the phase separation system 1 for maintenance and repair is reduced.

The first conduit 30 is at the top portion 21 configured for egress of the first phase from the chamber 20. The gas is conveyed through the first conduit 30 because of its low relative density. In one example, the first conduit 30 is a pipe. In the figures, the first conduit 30 is shown as perpendicular to the longitudinal axis 60 of the chamber 20, but the first conduit 30 may be parallel to the longitudinal axis 60 of the chamber 20.

The conical portion 40 is connected to the bottom portion 22 configured for egress of the second phase from the chamber 20. The conical portion 40, as in Figures 1A and 1B, may be frustoconical. The conical portion 40 may be integral with the chamber 20 or a discrete component of the phase separation system 1. As shown in Figure 1, the base of the conical portion 40 (i.e., the part of the conical portion 40 connected to the bottom portion 22 of the chamber 20) has a geometry complementary to that of the bottom portion 22 (e.g., the same diameter). The conical portion 40 is configured to guide and/or direct the second phase from the chamber 20 to the second conduit 50. The liquid falls from the inlet 10 towards the bottom of the chamber 20 and the conical portion 40 due to a pressure gradient applied by the gravity and, in some examples, the pump.

The second conduit 50 extends from the conical portion 40. In one example, the second conduit 50 is a pipe. As shown in Figures 1A and 1B, a section of the second conduit 50 is angled with respect to the longitudinal axis 60 of the chamber 20. In particular, a section (e.g., distal section 53 discussed below) of the second conduit 50 (e.g., a central or longitudinal axis of this section) may be at an angle of greater than 0° but less than 90° with respect to the longitudinal axis 60. For instance, the angle between this section and the longitudinal axis 60 of the chamber 20 may be less than 85°, between 5° and 89° or between 10° and 80°. Advantageously, a section of the second conduit 50 being angled with respect to the longitudinal axis 60 causes interruption of the whirlpool and/or a significant reduction of its rotational energy, as explained in more detail below, which may cause a transition of movement of the liquid from a rotational to a translational movement.

The second conduit 50 may comprise a straight section 51, termed a sewer pipe, extending along the longitudinal axis 60 from the conical portion 40. Effectively, the conical portion 40 and the straight section 51 form a funnel arrangement.

As shown in Figure 2, the whirlpool forms in the straight section 51. In Figure 2, the straight section has a length L_{SP}, and the whirlpool extends between the two dashed lines (i.e., the extent of the whirlpool is a length WP). In the example of Figure 2, the whirlpool is shown as having an anticlockwise rotational direction, but the whirlpool may have clockwise direction. For example, the rotational direction of the whirlpool may be affected by the position of the inlet 10. Changing the position of the inlet 10 to the other side of the chamber 20 may result in the whirlpool having a clockwise rotational direction. As mentioned, the whirlpool acts to separate the gas and the liquid of the fluid mixture received into the chamber 20 via the inlet 10. The liquid 102 flows along the second conduit 50 (indicated by the vertical arrows in Figure 2), while the separated gas 101 rises to exit via the first conduit 30 as a result of having lower relative density.

As shown in Figures 1A and 1B, the second conduit 50 comprises a bent section 52. The bent section 52 extends from the straight section 51. The bent section may directly extend from the straight section 51, whereby passage of liquid from the straight section 51 to the bent section 52 is unimpeded. The bent section 52 may be a section of the second conduit 50 that is curved or arched. The bent section 52 may be in the form of an elbow pipe. The bent section 52 interrupts the whirlpool and/or significantly reduces of its rotational energy, because the bent section 52 is angled with respect to the longitudinal axis 60. Advantageously, by interrupting the whirlpool and/or significantly reducing of its rotational energy, formation of bubbles is reduced along the section of the second conduit 50 in which measurements of properties of the liquid may be performed (e.g., distal section 53), thereby engendering more accurate measurements. That is, reducing the formation of bubbles along the distal section 53 engenders full occupation of the second conduit 50 by the liquid. In particular, the inclusion of the bent section 52 in combination with the tangential inlet 10 inhibits passage of air along the second conduit 50 and thereby facilitates full occupancy of the second conduit 50 by the liquid.

In one example, a stationary point (turning point) of the bent section 52 may be misaligned with the longitudinal axis 60. In other words, the point at which the gradient of, for instance, the central or longitudinal axis of the bent section is zero is offset from the longitudinal axis 60. Said differently, a point at which a tangent to the bent section 52 is perpendicular to the longitudinal axis 60 may be laterally displaced from the longitudinal axis 60. The stationary point corresponds to the nadir of the bent section 52 (i.e., the lowest point of the second conduit 50). The offset may be greater than the width of the straight section 51. In another example, the offset may be equivalent to greater than 50%, such as greater than 80% or 90%, of the width of the straight section 51. It has been found that this misaligned arrangement is especially effective at reducing the formation of bubbles along the section of the second conduit 50 that follows the bent section 52. The straight section 51 is located between the conical portion 40 and bent section 52.

The bent section 52 may comprise a port (not shown) for releasing liquid. The port may be a valve. In one example, the port is located at the lowest point of the phase separation system 1. The port enables liquid that is trapped in the bent section 52 to be released. Advantageously, therefore, after the phase separation process has been completed, any liquid remaining in the second conduit 50 may be retrieved.

In Figure 1A, the gas and the liquid remain separated after entering the first conduit 30 and the second conduit 50, respectively. In other words, the first conduit 30 and the second conduit 50 do not meet. The distal section 53 is inclined (e.g., at an angle of less than 90°, such as less than 85°, relative to the longitudinal axis 60 of the chamber 20), extending from the bent section 53 to a peak point 70. The conical portion 40 may be connected to the chamber 20 in the same horizontal plane as the peak point or above the peak point 70. In this context, a horizontal plane is a plane perpendicular to the longitudinal axis 60. In other words, considering a typical use of the phase separation system 1 in which the chamber 20 is placed on horizontal ground with its longitudinal axis 60 perpendicular to the ground, the height of the peak point 70 (i.e., the zenith of the second conduit 50) above the ground is the same as the height of the point of contact between the conical portion 40 and the chamber 20. Advantageously, this arrangement further reduces the formation of bubbles in the second conduit 50, thereby improving accuracy of any measurements taken therein. As shown in Figure 1A, the peak point 70 may correspond to the centre of an inverted elbow pipe.

Alternatively, in Figure 1B, the first conduit 30 and the second conduit 50 merge at the peak point 70 to recombine the first phase and the second phase. In this example, the peak point 70 is a merging point. As for Figure 1A, the conical portion 40 may be connected to the chamber 20 in the same horizontal plane as the peak point 70 or above the peak point 70, advantageously, resulting in reduced bubble formation in the second conduit 50.

The phase separation system 1 may comprise one or more measurement devices and/or one or more treatment devices (not shown) along the first conduit 30 and/or the second conduit 50. The one or more measurement devices are configured to measure a property of the first phase and/or the second phase, and the one or more treatment devices are configured to treat the first phase and/or the second phase. In one example, the first conduit 30 and/or the second conduit 50 comprises one or more measurement devices and/or treatment devices along an interior surface. In another example, the measurement and/or treatment devices are integrated into the first conduit 30 and/or the second conduit 50. The measurement and/or treatment devices may be distributed linearly, radially or helically along the interior surface.

Advantageously, the inclusion of the one or more measurement devices means that measurements of properties of the gas and/or liquid made be performed in real time. Relatedly, individual characterization of the phases is enabled. In other words, a property of one of the fluids may be measured in isolation from the other fluid in real time, thereby providing insights into their physical and/or chemical and/or structural and/or dynamic properties. Advantageously, the inclusion of the treatment devices enables treatment of the gas and/or liquid made be performed in *in situ* and in isolation.

The one or more measurement devices may include one or more of: a flowmeter, a calorimeter, a thermometer, a barometer, a hydrometer, a rheometer, a pH meter and a conductivity meter. Therefore, properties of the gas and/or liquid that may be determined includes one or more of: flow rate, viscosity, temperature, pressure, density acidity and electrical conductivity. In the case that the one or more measurement devices is a flowmeter, the flowmeter may be an electromagnetic flowmeter, an ultrasonic flowmeter, a vortex flowmeter, a Coriolis flowmeter, a thermal flowmeter or a clamp-on ultrasonic flowmeter. Advantageously, these types of flowmeters do not comprise mechanical parts. Consequently, these flowmeters are non-invasive (i.e., they do not disrupt the flow profile of the fluid), meaning that more reliable/accurate measurements may be taken. Examples of invasive flowmeters include differential pressure flowmeters, turbine flowmeters, positive displacement flowmeters, vortex shedding flowmeters and variable area flowmeters.

Further, separation of the gas and liquid phases may facilitate performance of surface analysis techniques (e.g., surface light scattering, surface tension measurement), spectroscopy (e.g., IR, Raman, acoustic), chromatography (e.g., high-performance liquid, ion), mass spectrometry, microscopy (e.g., optical, confocal, electron), dynamic light scattering, laser diffraction, optical coherence tomography, particle image velocimetry, laser Doppler velocimetry, magnetic resonance velocimetry, ultrasonic profiling, differential scanning calorimetry and thermogravimetric analysis on the gas and/or liquid. Therefore, the first conduit 30 and/or the second conduit 50 may comprise or be directly connectable to at least one of: a spectrometer, a chromatograph, a mass spectrometer, a microscope, a DLS detector, a diffractometer, a tomograph, a velocimeter, a calorimeter and a thermogravimetric analyser.

The one or more treatment devices may include one or more of: a UV light source, a heater, a cooler, an ultrasound source, a microwave source, an ionizer, an electrocoagulation device and a filter. For instance, inclusion of a UV light source may facilitate sterilization of one or both of the phases, inclusion of a heater or a microwave source may facilitate destruction of microbes present in one or both of the phases, inclusion of an ultrasound source may facilitate disruption of cell membranes or microorganisms and inclusion of a filter may facilitate removal of particulate matter from one or both of the phases.

The phase separation system 1 may comprise a chemical compound along the first conduit 30 and/or the second conduit 50 configured to chemically react with the first phase and/or the second phase. In one example, the chemical compound is a catalyser. Advantageously, therefore, a chemical property of the gas and/or liquid may be changed as part of the phase separation process. To increase the reaction rate the first conduit 30 (e.g., along an interior surface of the distal section 53) and/or the second conduit 50 may comprise a set of protuberances or a set of channels (not shown) to increase the contact area with the chemical compound.

Figures 3A and 3B illustrate the separation of the gas phase and the liquid phase by the phase separation systems 1 of, respectively, Figures 1A and 1B. In both Figures 3A and 3B, the pump 80 referred to above is included. The gas and the liquid are each drawn through by phase separation system 1 by the pump 80. In Figures 3A and 3B, the pump 80 is located after the phase separation system 1, but alternative locations 80 may be possible. The flow of the gas is indicated by arrows filled with a dotted pattern, and the flow of the liquid is indicated by plain arrows. At high pressures, in particular, the longitudinal axis 60 may deviate from being 90° relative to the surface on which the phase separation system rests.

In Figure 3A, the fluid mixture 103, comprising gas and liquid, enters the chamber 20 through the inlet 10. The gas phase and the liquid phase are separated as described above, the gas passing through the first conduit 30, and the liquid passing through the second conduit 50. Ultimately, the gas reaches an exclusively gas system 82, and the liquid reaches an exclusively liquid system 84. The exclusively gas system 82 and the exclusively liquid system may be collection units or release apparatuses.

A gas gate 81 and a liquid gate 83 may regulate the action of the pump 80 along the first conduit 30 and the second conduit 50, respectively. In an alternative example, instead of the pump 80, the gates 81, 82 are replaced by operationally independent pumps.

In Figure 3B, the fluid mixture 103, comprising gas and liquid, enters the chamber 20, through the inlet 10. The gas phase and the liquid phase are separated as described above, the gas passing through the first conduit 30, and the liquid passing through the second conduit 50. As described in relation to Figure 1B, the gas and the liquid are recombined at the merging point 70.

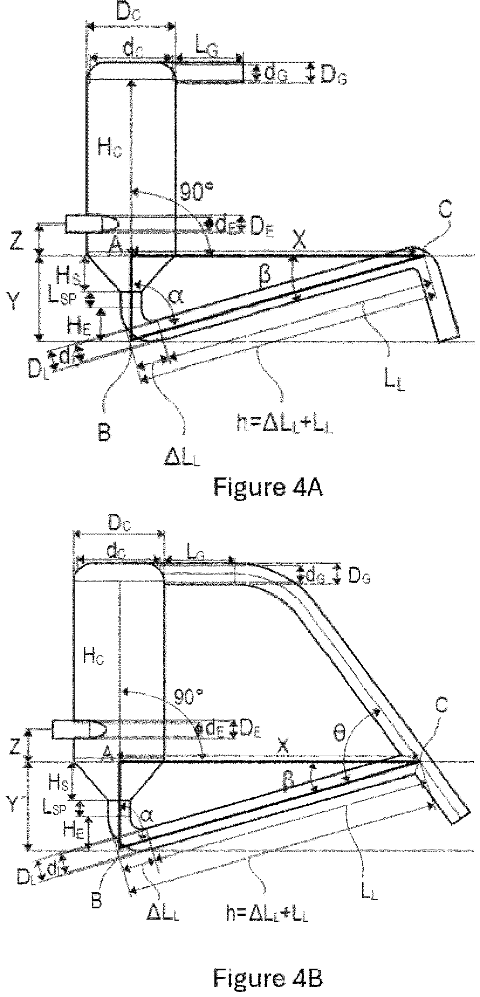

Figures 4A and 4B highlight particularly relevant dimensional features of the phase separation system 1. Exact dimensions of these features may vary according to, for example, application. The inlet 10 has an internal diameter d_{E} and an external diameter D_{E}. The centre of the inlet 10 is a distance Z from the bottom portion 22. The chamber has a height H_{C}, an internal diameter d_{C} and an external diameter D_{C}. The first conduit 30 has an initial section of length L_{G}, an internal diameter d_{G}, and an external diameter D_{G}. The conical section 40 has a height H_{S}. The second conduit 50 has an internal diameter d_{L} and an external diameter D_{L}. The straight section 51 of the second conduit 50 has a length L_{SP}. The bent section 52 of the second conduit 50 has a height H_{E} and a length ΔL_{L}. Together the conical section 40, the straight section 51 and the bent section 52 have a height Y. The distal section 53 of the second conduit has a length L_{L}. Thus, the second conduit 50 has a length h = ΔL_{L} + L_{L} from the longitudinal axis 60 to the peak point 70. The distance between the longitudinal axis 60 of the chamber 20 and the peak point 70 is denoted X. The angle between the first conduit 30 and the second conduit 50 at the peak point 70 in Figure 4B is denoted Θ.

As can be seen in Figures 4A and 4B, a right-angled evacuation triangle is formed by the distance X, the height Y and the length h (the hypotenuse). This evacuation triangle has vertices at points A, B and C, where A corresponds to the intersection of the bottom portion 22 with the longitudinal axis 60 and C corresponds to the peak point 70. B is a distance Y from A and perpendicular to X. An angle α is defined between sides Y and h of the triangle. An angle β is defined between sides X and h of the triangle. By maintaining vertex C at the same height or greater than vertex X, formation of bubbles in section conduit may, advantageously, be avoided. In other words, the angle between X and the longitudinal axis 60 should be 90°, as in Figures 4A and 4B, or less.

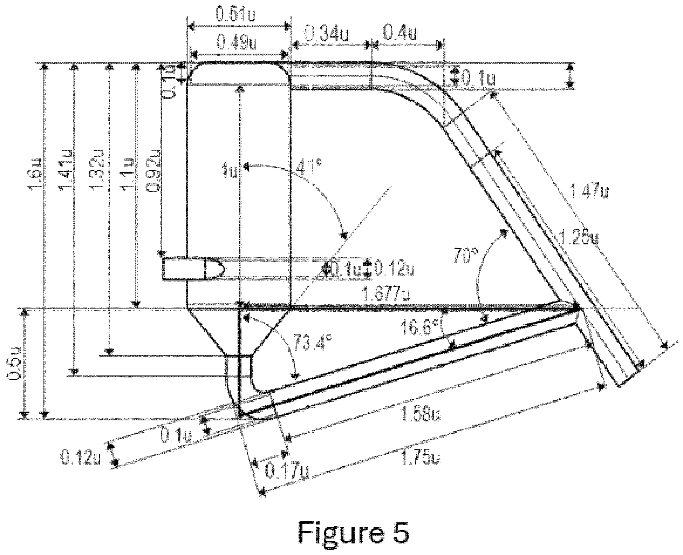

Figure 5 shows the phase separation system 1 of Figure 1B. In Figure 5, dimensions of components of the phase separation system 1, relative to the internal length H_{C} = u of the chamber 20 are shown, by way of example. For instance, Y as a length of 0.5u, X has a length of 1.677u and h has a length of 1.75u, α is 73.4° and β is 16.6°. These relative dimensions have been found to generally result in a high efficiency of operation of the phase separation system 1. These relative dimensions also apply to common components of the phase separation system 1 of Figure 1A.

Depending on the industrial application and the capacity of the pump 80, H_{C} may vary between 0.001 mm and 10000 mm. In one example, Y has a length of 0.25u to 10u, X has a length of 1u to 10u, h has a length of 1u to 14.1u, α is 5.7° to 88.5° and β is 1.4° to 84.2°. The length of X does not substantially affect the efficiency of operation of the phase separation system. The length of X may be determined by considerations such as spatial constraints. For a typical pressure gradient applied by the pump 80 ranging from 1 to 90 KPa, distances X and Y may be varied without substantially affecting the functioning of the phase separation system 1.

The wall thickness of the chamber 20 may depend on, *inter alia,* materials used in its fabrication, the intended industrial application and the pressure gradient applied by the pump 80. In one example relating to the use of the phase separation system 1 in the agriculture industry in which the chamber comprises iron and steel, H_{C} is 207 mm, d_{E} is 20 mm and d_{L} is 20 mm, a wall thickness of the chamber 20 of 2 mm is sufficient for use of a pump 80 generating a maximum pressure of 50 KPa to generate flowing ranges of milk from 2 L/min to 10 L/ min.

Similarly, the length L_{SP} of the straight section 51 may depend on the pressure gradient applied by the pump 80. In the case of a straight section 51 having an internal diameter of 1.8 cm, a length of 12 cm would suffice to prevent the entry of air or gas carried by the whirlpool for flow rates ranging from 0.01 L/min to 8.5 L/min.

The internal diameter d_{E} of the inlet 10 may be the same as the internal diameter d_{L} of the second conduit 50. For example, in Figure 5 both the inlet 10 and the second conduit 50 have an internal diameter of 0.12u. Consequently, advantageously, a constant liquid level inside the chamber 20 is facilitated such that overfilling can be avoided. In another example, the internal diameter d_{E} of the inlet 10 may be smaller than the internal diameter d_{L} of the second conduit 50.

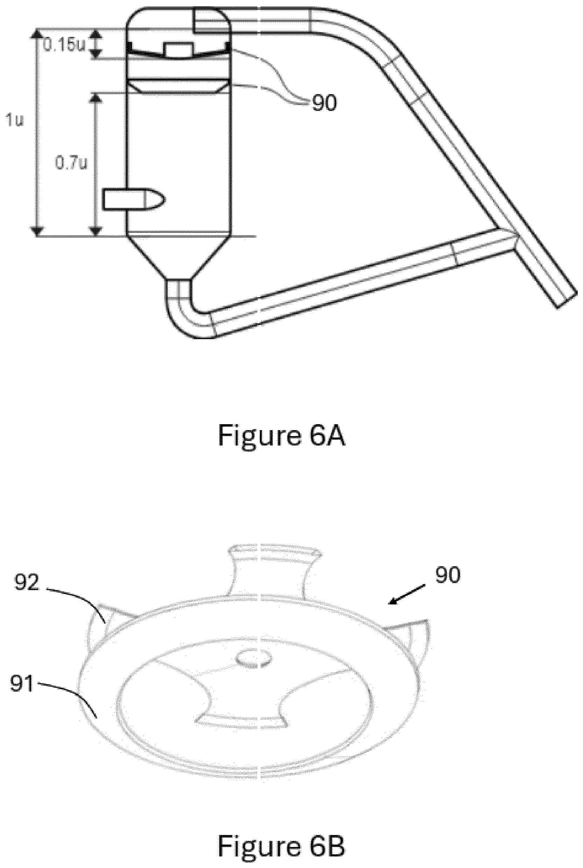

As shown in Figure 6A, the phase separation system 1 may comprise a baffle 90 towards the top of the chamber 20. In Figure 6A the baffle 90 is included in the phase separation system 1 of Figures 1B, 3B and 4B, but phase separation system 1 of Figures 1A, 3A and 4A may also comprise this baffle 90. By way of example, Figure 6A shows the baffle located at a position 0.7u from the bottom section 22. The baffle forms an anti-foam system. In more detail, depending on the nature of the liquid (e.g., viscosity), foam may form on entry of liquid into the chamber 20. The baffle 90 is a physical barrier that, advantageously, inhibits any foam formed from entering the gas conduit 30.

Figure 6B shows the baffle 90 in more detail. As shown in Figure 6B, the baffle 90 may comprise a first part 91 and a second part 92. The first part 91 is located further from the top of the chamber 20 than the second part 92. The first part 91 in Figure 6B comprises a circular annulus. In other examples, the annulus may be elliptical, for instance, depending on the geometry of the chamber 20. As shown in Figure an outer edge of the annulus may be lipped. Advantageously, the geometry of the first part 91 may prevent passage of liquid to the first conduit 30 while allowing passage of gas through its centre. The second part 92 comprises arms radiating from a central area, the central area including an aperture. Vapour transported by gas that has passed through the centre of the first part 91 may condense on contacting the second part 92. Thus, advantageously, the second part 92 may further reduce the likelihood of liquid entering the first conduit 30.

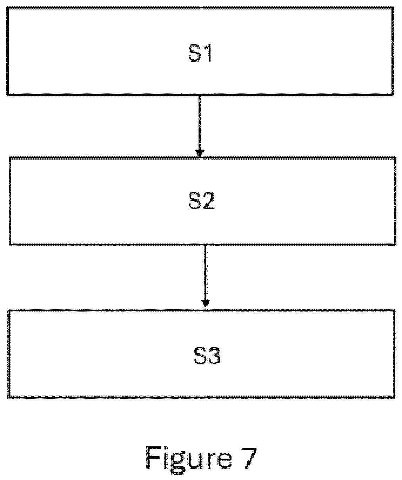

Figure 7 shows a method of phase separation for separating the first phase and the second phase. The method comprises directing S1 the fluid mixture 103 to the inlet 10 of the phase separation system 1 and separating S2 the first phase and the second phase. As described, the inlet 10 is tangential to the curved surface 23 of the chamber 20. The method also comprises obtaining S3 an output from the phase separation system 1. The output may be the gas phase and or the liquid phase in a case in which the phase separation system is as described in relation to Figures 1A, 3A and 4A. The output may be a fluid mixture in a case in which the phase separation system 1 is as described in relation to Figures 1B, 3B and 4B.

## Claims

1. A phase separation system (1) for separating a first phase and a second phase, the phase separation system (1) comprising:
an inlet (10) configured to receive a fluid mixture (103) comprising the first phase and the second phase, wherein the first phase is a gas (101), and the second phase is a liquid (102);
a chamber (20) comprising a top portion (21), a bottom portion (22) and a curved surface (23) extending between the top portion (21) and the bottom portion (22), wherein the chamber (20) is configured for ingress of the mixture (103) from the inlet (10), and wherein the inlet (10) is tangential to the curved surface (23);
a first conduit (30) at the top portion (21) configured for egress of the first phase from the chamber (20);
a conical portion (40) connected to the bottom portion (22) configured for egress of the second phase from the chamber (20); and
a second conduit (50) extending from the conical portion (40), wherein the second conduit (50) comprises a bent section (52) and an inclined section, wherein the inclined section extends from the bent section (52) to a peak point (70), and wherein an angle between a longitudinal axis (60) of the chamber (20) and the inclined section is less than 90°, the longitudinal axis (60) extending between the top portion (21) and the bottom portion (22),
wherein the internal diameter of the inlet (10) is the same as the internal diameter of the second conduit (50) or less than the internal diameter of the second conduit (50).

2. The phase separation system (1) of claim 1, wherein the chamber (20) is cylindrical.

3. The phase separation system (1) of claim 1 or 2, wherein the bent section (52) comprises a port for releasing liquid.

4. The phase separation system (1) of any preceding claim, wherein a stationary point of the bent section (52) is misaligned with the longitudinal axis (60) of the chamber (20).

5. The phase separation system (1) of any preceding claim, wherein the second conduit (50) comprises a straight section (51) extending along the longitudinal axis (60) of the chamber (20) from the conical portion (40) to the bent section (52).

6. The phase separation system (1) of any preceding claim, wherein the conical portion (40) is connected to the chamber (20) in the same horizontal plane as the peak point (70) or above the peak point (70).

7. The phase separation system (1) of claim 6, wherein the first conduit (30) and the second conduit (50) merge at the peak point to recombine the first phase and the second phase.

8. The phase separation system (1) of any preceding claim, further comprising one or more measurement devices along the first conduit (30) and/or the second conduit (50) configured to measure a property of the first phase and/or the second phase.

9. The phase separation system (1) of claim 8, wherein the one or more measurement devices is selected from a list comprising: a flowmeter, a calorimeter, a thermometer, a barometer, a hydrometer, a rheometer, a pH meter and a conductivity meter.

10. The phase separation system (1) of any preceding claim, wherein the first conduit (30) and/or the second conduit (50) comprises at least one of: a spectrometer, a chromatograph, a mass spectrometer, a microscope, a DLS detector, a diffractometer, a tomograph, a velocimeter, a calorimeter and a thermogravimetric analyser.

11. The phase separation system (1) of any preceding claim, further comprising a chemical compound along the first conduit (30) and/or the second conduit (50) configured to chemically react with the first phase and/or the second phase.

12. The phase separation system (1) of any preceding claim, further comprising one or more treatment devices along the first conduit (30) and/or the second conduit (50) configured to treat the first phase and/or the second phase, wherein the one or more treatment devices is selected from a list comprising: a UV light source, a heater, a cooler, an ultrasound source, a microwave source, an ionizer, an electrocoagulation and a filter.

13. The phase separation system (1) of any preceding claim, further comprising:
a baffle (90) towards the top of the chamber (20).

## Patentansprüche

1. Ein Phasentrennsystem (1) zum Trennen einer ersten Phase und einer zweiten Phase, wobei das Phasentrennsystem (1) Folgendes umfasst:
einen Einlass (10), der dazu konfiguriert ist, eine Fluidmischung (103) aufzunehmen, die die erste Phase und die zweite Phase umfasst, wobei die erste Phase ein Gas (101) ist und die zweite Phase eine Flüssigkeit (102) ist;
eine Kammer (20), die einen oberen Abschnitt (21), einen unteren Abschnitt (22) und eine gekrümmte Oberfläche (23) umfasst, die sich zwischen dem oberen Abschnitt (21) und dem unteren Abschnitt (22) erstreckt, wobei die Kammer (20) zum Eintreten der Mischung (103) von dem Einlass (10) konfiguriert ist und wobei der Einlass (10) tangential zu der gekrümmten Oberfläche (23) ist;
eine erste Leitung (30) am oberen Abschnitt (21), die zum Austritt der ersten Phase aus der Kammer (20) konfiguriert ist;
einen konischen Abschnitt (40), der mit dem unteren Abschnitt (22) verbunden ist, der zum Austritt der zweiten Phase aus der Kammer (20) konfiguriert ist; und
eine zweite Leitung (50), die sich von dem konischen Abschnitt (40) erstreckt, wobei die zweite Leitung (50) einen gebogenen Abschnitt (52) und einen geneigten Abschnitt umfasst, wobei sich der geneigte Abschnitt von dem gebogenen Abschnitt (52) zu einem Scheitelpunkt (70) erstreckt, und wobei ein Winkel zwischen einer Längsachse (60) der Kammer (20) und dem geneigten Abschnitt weniger als 90° beträgt, wobei sich die Längsachse (60) zwischen dem oberen Abschnitt (21) und dem unteren Abschnitt (22) erstreckt,
wobei der Innendurchmesser des Einlasses (10) gleich dem Innendurchmesser der zweiten Leitung (50) oder kleiner als der Innendurchmesser der zweiten Leitung (50) ist.

2. Das Phasentrennsystem (1) von Anspruch 1, wobei die Kammer (20) zylindrisch ist.

3. Das Phasentrennsystem (1) von Anspruch 1 oder 2, wobei der gebogene Abschnitt (52) eine Öffnung zum Freisetzen von Flüssigkeit umfasst.

4. Das Phasentrennsystem (1) von einem der vorhergehenden Ansprüche, wobei ein stationärer Punkt des gebogenen Abschnitts (52) nicht mit der Längsachse (60) der Kammer (20) fluchtet.

5. Das Phasentrennsystem (1) von einem der vorhergehenden Ansprüche, wobei die zweite Leitung (50) einen geraden Abschnitt (51) umfasst, der sich entlang der Längsachse (60) der Kammer (20) von dem konischen Abschnitt (40) zu dem gebogenen Abschnitt (52) erstreckt.

6. Das Phasentrennsystem (1) von einem der vorhergehenden Ansprüche, wobei der konische Abschnitt (40) mit der Kammer (20) in der gleichen horizontalen Ebene wie der Scheitelpunkt (70) oder über dem Scheitelpunkt (70) verbunden ist.

7. Das Phasentrennsystem (1) von Anspruch 6, wobei die erste Leitung (30) und die zweite Leitung (50) an dem Scheitelpunkt zusammenführen, um die erste Phase und die zweite Phase wieder zu kombinieren.

8. Das Phasentrennsystem (1) von einem der vorhergehenden Ansprüche, ferner umfassend eine oder mehrere Messvorrichtungen entlang der ersten Leitung (30) und/oder der zweiten Leitung (50), die dazu konfiguriert sind, eine Eigenschaft der ersten Phase und/oder der zweiten Phase zu messen.

9. Das Phasentrennsystem (1) von Anspruch 8, wobei die eine oder die mehreren Messvorrichtungen aus einer Liste ausgewählt ist, die Folgendes umfasst: einen Durchflussmesser, ein Kalorimeter, ein Thermometer, ein Barometer, ein Hydrometer, ein Rheometer, ein pH-Meter und einen Leitfähigkeitsmesser.

10. Das Phasentrennsystem (1) von einem der vorhergehenden Ansprüche, wobei die erste Leitung (30) und/oder die zweite Leitung (50) mindestens eines von den Folgenden umfasst: ein Spektrometer, einen Chromatographen, ein Massenspektrometer, ein Mikroskop, einen DLS-Detektor, ein Diffraktometer, einen Tomographen, einen Geschwindigkeitsmesser, ein Kalorimeter und einen thermogravimetrischen Analysator.

11. Das Phasentrennsystem (1) von einem der vorhergehenden Ansprüche, ferner umfassend eine chemische Verbindung entlang der ersten Leitung (30) und/oder der zweiten Leitung (50), die dazu konfiguriert ist, mit der ersten Phase und/oder der zweiten Phase chemisch zu reagieren.

12. Das Phasentrennsystem (1) von einem der vorhergehenden Ansprüche, ferner umfassend eine oder mehrere Behandlungsvorrichtungen entlang der ersten Leitung (30) und/oder der zweiten Leitung (50), die dazu konfiguriert sind, die erste Phase und/oder die zweite Phase zu behandeln, wobei die eine oder die mehreren Behandlungsvorrichtungen aus einer Liste ausgewählt ist, die Folgendes umfasst: eine UV-Lichtquelle, eine Heizvorrichtung, einen Kühler, eine Ultraschallquelle, eine Mikrowellenquelle, einen lonisator, eine Elektrokoagulation und einen Filter.

13. Das Phasentrennsystem (1) von einem der vorhergehenden Ansprüche, ferner umfassend:
eine Ablenkplatte (90) in Richtung der Oberseite der Kammer (20).

## Revendications

1. Un système de séparation de phases (1) pour séparer une première phase et une seconde phase, le système de séparation de phases (1) comprenant :
une entrée (10) configurée pour recevoir un mélange fluide (103) comprenant la première phase et la seconde phase, dans lequel la première phase est un gaz (101), et la seconde phase est un liquide (102) ;
une chambre (20) comprenant une partie supérieure (21), une partie inférieure (22) et une surface incurvée (23) s'étendant entre la partie supérieure (21) et la partie inférieure (22), dans lequel la chambre (20) est configurée pour l'entrée du mélange (103) depuis l'entrée (10), et dans lequel l'entrée (10) est tangentielle à la surface incurvée (23) ;
un premier conduit (30) au niveau de la partie supérieure (21) configuré pour la sortie de la première phase de la chambre (20) ;
une partie conique (40) connectée à la partie inférieure (22) configurée pour la sortie de la seconde phase de la chambre (20) ; et
un second conduit (50) s'étendant à partir de la partie conique (40), dans lequel le second conduit (50) comprend une section courbée (52) et une section inclinée, dans lequel la section inclinée s'étend à partir de la section courbée (52) jusqu'à un point de crête (70), et dans lequel un angle entre un axe longitudinal (60) de la chambre (20) et la section inclinée est inférieur à 90°, l'axe longitudinal (60) s'étendant entre la partie supérieure (21) et la partie inférieure (22),
dans lequel le diamètre interne de l'entrée (10) est le même que le diamètre interne du second conduit (50) ou inférieur au diamètre interne du second conduit (50).

2. Le système de séparation de phases (1) de la revendication 1, dans lequel la chambre (20) est cylindrique.

3. Le système de séparation de phases (1) de la revendication 1 ou 2, dans lequel la section courbée (52) comprend un orifice pour libérer du liquide.

4. Le système de séparation de phases (1) de l'une quelconque des revendications précédentes, dans lequel un point stationnaire de la section courbée (52) est désaligné par rapport à l'axe longitudinal (60) de la chambre (20).

5. Le système de séparation de phases (1) de l'une quelconque des revendications précédentes, dans lequel le second conduit (50) comprend une section droite (51) s'étendant le long de l'axe longitudinal (60) de la chambre (20) depuis la partie conique (40) jusqu'à la section courbée (52).

6. Le système de séparation de phases (1) de l'une quelconque des revendications précédentes, dans lequel la partie conique (40) est connectée à la chambre (20) dans le même plan horizontal que le point de crête (70) ou au-dessus du point de crête (70).

7. Le système de séparation de phases (1) de la revendication 6, dans lequel le premier conduit (30) et le second conduit (50) se rejoignent au point de crête pour recombiner la première phase et la seconde phase.

8. Le système de séparation de phases (1) de l'une quelconque des revendications précédentes, comprenant en outre un ou plusieurs dispositifs de mesure le long du premier conduit (30) et/ou du second conduit (50) configurés pour mesurer une propriété de la première phase et/ou de la seconde phase.

9. Le système de séparation de phases (1) de la revendication 8, dans lequel le un ou les plusieurs dispositifs de mesure est choisi dans une liste comprenant : un débitmètre, un calorimètre, un thermomètre, un baromètre, un hydromètre, un rhéomètre, un pH-mètre et un conductimètre.

10. Le système de séparation de phases (1) de l'une quelconque des revendications précédentes, dans lequel le premier conduit (30) et/ou le second conduit (50) comprend au moins l'un parmi : un spectromètre, un chromatographe, un spectromètre de masse, un microscope, un détecteur DLS, un diffractomètre, un tomographe, un vélocimètre, un calorimètre et un analyseur thermogravimétrique.

11. Le système de séparation de phases (1) de l'une quelconque des revendications précédentes, comprenant en outre un composé chimique le long du premier conduit (30) et/ou du second conduit (50) configuré pour réagir chimiquement avec la première phase et/ou la seconde phase.

12. Le système de séparation de phases (1) de l'une quelconque des revendications précédentes, comprenant en outre un ou plusieurs dispositifs de traitement le long du premier conduit (30) et/ou du second conduit (50) configurés pour traiter la première phase et/ou la seconde phase, dans lequel le un ou les plusieurs dispositifs de traitement sont sélectionnés dans une liste comprenant : une source de lumière UV, un dispositif de chauffage, un dispositif de refroidissement, une source d'ultrasons, une source de micro-ondes, un ioniseur, une électrocoagulation et un filtre.

13. Le système de séparation de phases (1) de l'une quelconque des revendications précédentes, comprenant en outre :
un déflecteur (90) vers le haut de la chambre (20).
